# EUROPÄISCHE PATENTANMELDUNG

(11) **EP 0 630 553 A1**
(43) Veröffentlichungstag der Anmeldung: **28.12.1994**
(21) Anmeldenummer: 94109363.5
(22) Anmeldetag: 17.06.1994
(51) Int. Cl.: A01B 71/06, A01D 34/64

(54) **Geräteantriebsvorrichtung für eine Fahrzeug-Geräte-Kombination**

(30) Priorität: 22.06.1993 US 80945
(71) Anmelder: DEERE & COMPANY, Moline, Illinois 61265 (US)
(72) Erfinder: Hutchison, Wayne Robert, Mayville, Wisconsin 53050 (US); Sebben, Daniel Angelo, West Bend, Wisconsin 53095 (US)
(74) Vertreter: Feldmann, Bernhard

(57) **Zusammenfassung**

Bei einer Geräteantriebsvorrichtung für eine Fahrzeug - Geräte-Kombination, wobei das Fahrzeug mindestens ein antreibbares Laufrad und einen Motor (38) mit einer bodenwärts austretenden Kurbelwelle (18) aufweist, das Gerät an dem Fahrzeug höhenbeweglich angeschlossen ist und wenigstens eine Riemenscheibe (58) aufweist, die von der Kurbelwelle (18) aus über einen einzigen Riemen (62) antreibbar ist, ist an das bodenwärts austretende Ende der Kurbelwelle (18) eine Verlängerung (40) mit einer Antriebsscheibe (44) anschließbar, die den einzigen Riemen (62) antreibt.

## Beschreibung

Die Erfindung bezieht sich auf eine Geräteantriebsvorrichtung für eine Fahrzeug - Geräte - Kombination, wobei das Fahrzeug mindestens ein antreibbares Laufrad und einen Motor mit einer bodenwärts austretenden Kurbelwelle aufweist, das Gerät an dem Fahrzeug höhenbeweglich angeschlossen ist und wenigstens eine Riemenscheibe aufweist, die von der Kurbelwelle aus über einen einzigen Riemen antreibbar ist.

Kleinschlepper, die in der Rasen- und Landschaftspflege eingesetzt werden, können mit unterschiedlichen Geräten bestückt werden. In der Regel sind sie immer so ausgebildet, daß sie einen Rasenmäher höhenbeweglich aufnehmen und diesen auch antreiben. Im Einsatz führen solche Rasenmäher mit Bezug auf den Kleinschlepper vertikale Relativbewegungen aus, wenn der Rasenmäher auf Bodenunebenheiten auftrifft. Außerdem können solche Rasenmäher manuell höhenverstellt werden, um unterschiedliche Schnitthöhen erreichen zu können. Zum Überleiten des Antriebs von dem Fahrzeug auf den Rasenmäher dient bevorzugt ein Riementrieb mit einer Antriebsscheibe auf einer bodenwärts austretenden und vom Motor des Schleppers angetriebenen Kurbelwelle oder dgl. Von dieser Antriebsscheibe aus ist ein Riemen antreibbar, der seinerseits um mindestens eine auf der Mäheroberseite vorgesehene Riemenscheibe geführt ist, die im Falle eines Rasenmähers ein um eine vertikale Welle umlaufendes Messer antreibt. Sind mehrere Messer vorgesehen, so ist jedem Messer eine Riemenscheibe zugeordnet. Außerdem können noch Umlenkscheiben und Spannscheiben auf der Mäheroberseite vorgesehen sein. Alle diese Riemenscheiben werden bei einer Höhenänderung des Mähers diese Höhenänderungen mitvollziehen. Andererseits verändert die an die Kurbelwelle angeschlossene Antriebsscheibe bei einer Höhenänderung des Gerätes ihre Lage nicht, weshalb es bei Höhenverstellungen zu Riemenauslenkungen kommt, die zu Verschleiß führen, die Lebensdauer des Riemens verringern und die Leistungsübertragung zumindest vermindern. In Einzelfällen kann es sogar bei zu starken Winkeländerungen zum Abspringen des Riemens kommen. Alle diese Nachteile treten auch bei der bekannten Geräteantriebsvorrichtung auf, von der die Erfindung ausgeht (US-A-4 120 136).

Um die Winkeländerungen zu begrenzen, sind deshalb bereits Übersetzungsscheiben vorgeschlagen worden (EP-A1-0 445 623). Diese bestehen aus einer normalerweise vertikal gerichteten Welle mit zwei zueinander Abstand aufweisenden Riemenscheiben. Der Riementrieb benötigt mindestens zwei Endlosriemen. Übersetzungsscheiben lassen sich dort gut einsetzen, wo es die Platzverhältnisse erlauben. Gängige Übersetzungsscheiben können jedoch bei höhenverstellbaren Geräten ebenfalls nicht verhindern, daß sich die Winkellage eines Riemens bei einer Höhenverstellung ändert. Außerdem sind derartige Riementriebe aufwendiger, da im Vergleich mit dem eingangs genannten Antrieb ein weiterer Riemen und die Übersetzungsscheibe erforderlich sind.

Außerdem ist es auch nicht neu (US-A-3 795 094), eine bodenwärts austretende Kurbelwelle zusätzlich mit einer Riemenscheibe auszurüsten, über die das Fahrzeug antreibbar ist.

Die mit der Erfindung zu lösende Aufgabe wird darin gesehen, die eingangs genannte Geräteantriebsvorrichtung mit einfachen Mitteln derart zu verbessern, daß die Winkeländerungen des Riemens bei einer Höhenverstellung des Geräte äußerst gering bzw. unerheblich sind. Hierzu ist vorgesehen, daß an das bodenwärts austretende Ende der Kurbelwelle eine Verlängerung mit einer Antriebsscheibe anschließbar ist, die den einzigen Riemen antreibt. Auf diese Weise wird die Antriebsscheibe tiefer in eine Lage versetzt, die etwa in derselben Horizontalebene liegt, wie die am Gerät vorgesehenen Riemenscheiben, wenn das Gerät eine mittlere Arbeitsstellung einnimmt. Bei einem Höhenverstellen des Gerätes sind dann die Winkeländerungen minimal.

Zweckmäßig kann die Verlängerung als eine auf die Kurbelwelle aufsteckbare Manschette ausgebildet sein, die über eine Keil-Nuten- Verbindung mit der Kurbelwelle drehfest verbunden ist.

Schließlich kann nach der Erfindung noch oberhalb der Manschette das bodenwärts austretende Ende der Kurbelwelle mit einer Riemenscheibe zum Antrieb des antreibbaren Laufrades versehen und die Manschette oberhalb der Antriebsscheibe mit einer elektrischen Kupplung versehen sein, wobei die Manschette mit einer die elektrische Kupplung und die Antriebsscheibe aufnehmenden Manschettenverlängerung versehen ist.

Die Manschette kann mit der Kurbelwelle verschraubbar sein, wobei die Manschettenverlängerung einen kleineren Außendurchmesser als die Manschette aufweist und mit einer Längsbohrung zur Aufnahme einer Schraubverbindung versehen ist, über die die elektrische Kupplung und die Antriebsscheibe mit der Kurbelwelle verbindbar sind.

Bei einer gegebenen Höhenverstellung wird letztlich nach der Erfindung vorgeschlagen, daß bei mit der Kurbelwelle befestigter Manschette die Antriebsscheibe eine derartige Lage einnimmt, daß bei einem Höhenverstellen des Gerätes bzw. der geräteseitigen Riemenscheibe die Winkeländerung des Riemens weniger als 12° beträgt.

In der Zeichnung ist ein nachfolgend näher erläutertes Ausführungsbeispiel der Erfindung dargestellt. Es zeigt:
- Fig. 1: ein in der Garten- und Landschaftspflege einsetzbares Fahrzeug in Form eines Kleinschleppers und in Seitenansicht mit einem riemengetriebenen und höhenverstellbaren Gerät, das als Rasenmäher ausgebildet ist,
- Fig. 2: die Geräteantriebsvorrichtung in einem vergrößerten Maßstab und den Höhenverstellbereich des einzigen Riemens,
- Fig. 3: den Riementrieb der Geräteantriebsvorrichtung in der Draufsicht,
- Fig. 4: eine auf dem Kurbelwellenende aufsitzende Kurbelwellenverlängerung mit einer Antriebsscheibe und einer Kupplung und
- Fig. 5: die Kurbelwellenverlängerung.

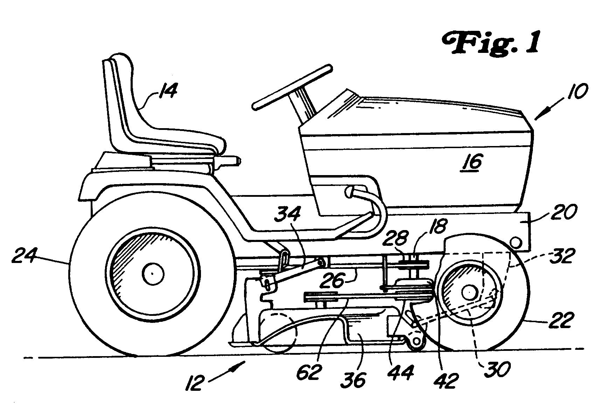

In Fig. 1 der Zeichnung ist ein in der Garten- und Landschaftspflege einsetzbares Fahrzeug mit 10 bezeichnet. Um diesen Zweck erfüllen zu können, sind derartige Fahrzeuge mit einem Mähwerk 12 zum Schneiden von Gras ausgerüstet. Aus Fig. 1 ist zu erkennen, daß das Mähwerk zwischen den Fahrzeugachsen unterhalb des Fahrzeugrumpfes aufgehängt ist. In Fig. 1 sieht man ferner einen Fahrersitz 14, eine Motorverkleidung 16 für einen Motor, der eine nach unten durch das Fahrzeugchassis 20 austretende Kurbelwelle 18 aufweist, vordere lenkbare Laufräder 22 und rückwärtige antreibbare Laufräder 24. Letztere werden über einen Riemen 26 angetrieben, der seinen Antrieb von einer Riemenscheibe 28 aus erhält, die auf der Kurbelwelle 18 fest angeordnet ist.

Das Mähwerk ist als Sichelmäher mit um vertikale Achsen umlaufende Sichelmesser ausgebildet. Solche Mähwerke sind in verschiedene Arbeitsstellungen für den Mähbetrieb höhenverstellbar, um Schnitthöhen zwischen beispielweise 2,54 cm und 8,89 cm erreichen zu können. Gleichzeitig sind sie auch noch in eine Transportstellung verstellbar, in der die Sichelmesser jedoch nicht angetrieben werden. Beim vorliegenden Ausführungsbeispiel ist das Mähwerk 12 am Fahrzeug 10 über vordere Zuglenker 30, die das Mähwerk ziehen und an fahrzeugseitigen und nach unten weisenden Rahmenteilen 32 angreifen, und am rückwärtigen Ende über eine Art Viergelenkkette angeschlossen, von der eine seitliche Stange 34 in Fig. 1 dargestellt ist. Jeweils eine Stange 34 erstreckt sich von dem Fahrzeugchassis aus an beiden Seiten des Mähwerksgehäuses 36 nach rückwärts bis zu dem Mähwerk.

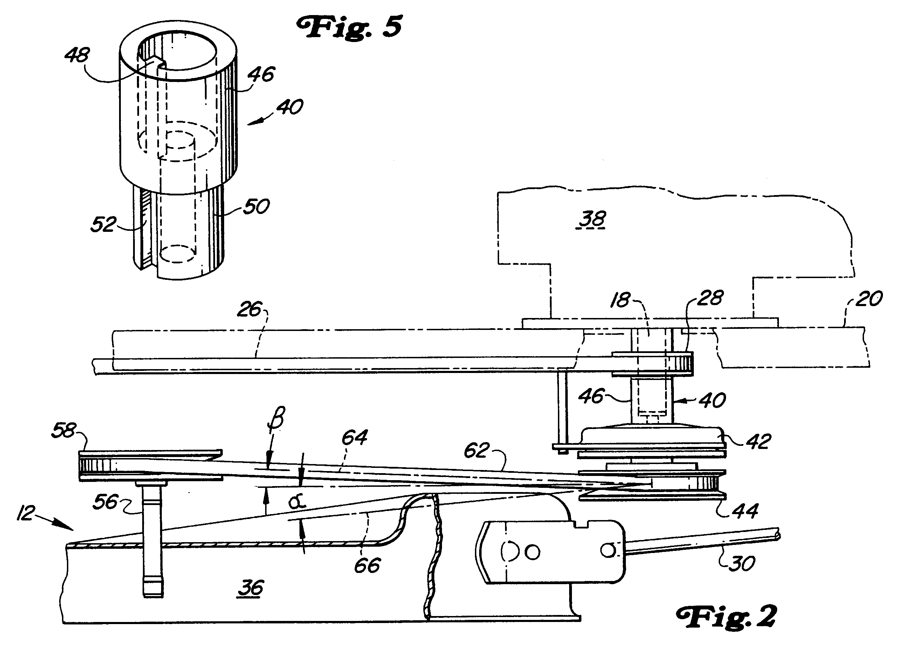

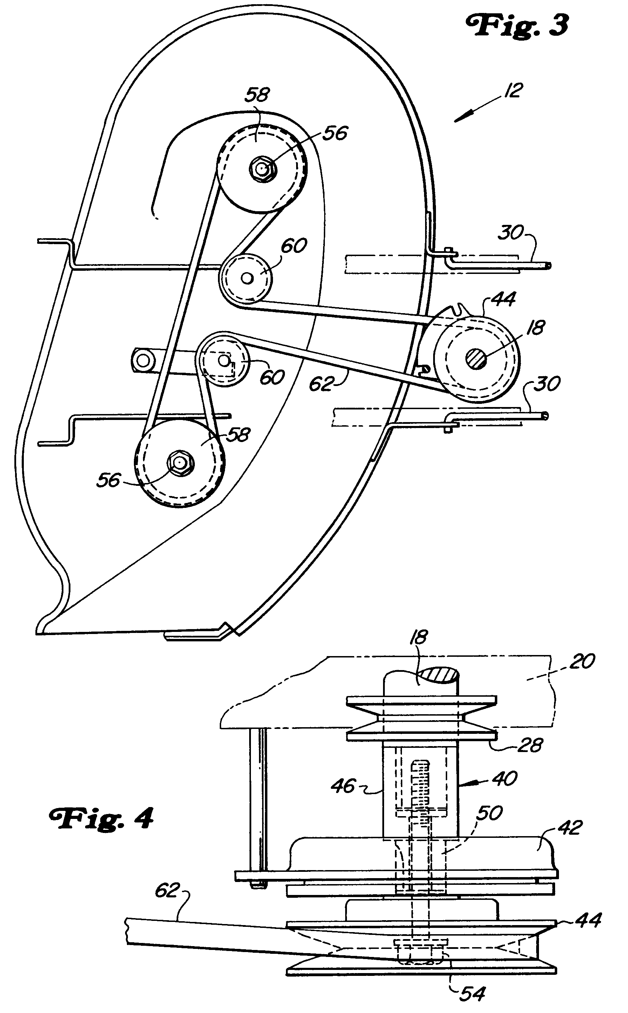

In den Fig. 2 und 3 ist die Antriebseinrichtung in einem größeren Maßstab dargestellt. In gestrichelten Linien ist in Fig. 2 der Verbrennungsmotor 38 angedeutet, der ortsfest auf dem Fahrzeugchassis 20 angeordnet und mit der bereits erwähnten und nach unten austretenden Kurbelwelle 18 versehen ist. In einem oberen Endbereich der Kurbelwelle 18 ist die Riemenscheibe 28 vorgesehen, um die der Antriebsriemen 26 geführt ist. Letzterer erstreckt sich von der Riemenscheibe 28 nach rückwärts bis zu einem zwischen den beiden rückwärtigen Laufrädern angeordneten und in der Zeichnung der Einfachheit halber nicht dargestellten Endgetriebe, über das die rückwärtigen Räder antreibbar sind.

An das aus dem Fahrzeugchassis 20 nach unten austretende Ende der Kurbelwelle 18 ist eine Stummelwelle oder Verlängerung 40 angeschlossen. Diese ist in Fig. 5 dargestellt und soll das Ende der Kurbelwelle 18 nach unten bzw. bodenwärts verlängern.

Beim bevorzugten Ausführungsbeispiel nimmt die Stummelwelle 40 unterhalb der Riemenscheibe 28 noch eine elektrische Kupplung 42 und eine weitere Riemenscheibe 44 auf. Letztere dient zum Antrieb der Sichelmesser, wobei dieser Antrieb über die elektrische Kupplung 42 ein- oder ausschaltbar ist.

Aus den Fig. 4 und 5 ist nun leicht erkennbar, daß die Verlängerung 40 im einzelnen aus einem ersten Abschnitt oder einer Manschette 46 mit einem Innenkeil 48 besteht, so daß dieser Abschnitt auf das untere Ende der Kurbelwelle 18 drehfest aufgesteckt werden kann. An die Manschette 46 schließt sich eine weitere Verlängerung 50 mit einem zylindrischen Mantel an, dessen Außendurchmesser in etwa dem des Endes der Kurbelwelle 18 entspricht, so daß sie die elektrische Kupplung 42 mit der Antriebsscheibe 44 aufnehmen kann. Für eine drehfeste Verbindung mit der elektrischen Kupplung bzw. der Antriebsscheibe ist die Verlängerung 50 noch mit einem Nutenschlitz 52 versehen. In das Ende der Kurbelwelle 18 kann noch eine Sackbohrung mit Innengewinde eingearbeitet sein, wodurch die Stummelwelle über geeignete Befestigungsmittel 54 mit der Kurbelwelle verschraubt werden kann. Damit kann über die Keil- und Schraubverbindung die Drehbewegung der Kurbelwelle in sicherer aber äußerst einfacher Weise auf die Stummelwelle 40 übertragen werden.

Das bevorzugte Ausführungsbeispiel ist mit zwei Sichelmessern ausgerüstet, die über sich vertikal erstreckende Wellen 56, die an ihren oberen Enden Abtriebsscheiben 58 aufweisen, angetrieben werden. In Fig. 3 sind außerdem noch zwei Riemenumlenkscheiben 60 zu ersehen, von denen eine verschwenkbar ist und unter der Wirkung einer Feder steht, damit ein von der Antriebsscheibe 44 aus antreibbarer Riemen 62 stets gespannt bleibt, insbesondere wenn das Mähwerk 12 höhenverstellt wird oder wenn das auf dem Boden über Rollen geführte Mähwerk auf Bodenunebenheiten auftrifft und dabei vertikale Relativbewegungen zu dem Fahrzeug 10 ausführt. Über den Riemen 62 sind die Abtriebsscheiben 58 antreibbar.

Aus Fig. 1 ist nun erkennbar, daß der einzige das Mähwerk 12 antreibende Riemen 62 eine horizontale Lage einnimmt, in der die Antriebsriemenscheibe 44 und die Umlenkscheiben 60 in derselben Horizontalebene liegen. Unter dieser Bedingung treten keine Leistungsverluste auf und der Riemenverschleiß ist minimal. Ändert sich jedoch die Winkellage des Riemens, so sind Leistungsverluste zu befürchten und ein erhöhter Riemenverschleiß tritt ein, weshalb man immer bemüht ist, die Änderung der Winkellage so klein wie möglich zu halten. Eine Änderung der Winkellage kann jedoch nicht vermieden werden, wenn das Mähwerk 12 an das Fahrzeug 10 höhenbeweglich angeschlossen ist, und aus Fig. 2 sind die maximalen Riemenauslenkungen für die höchste Arbeitsstellung und für die niedrigste Arbeitsstellung erkennbar, wobei noch darauf hinzuweisen ist, daß sich die Lage der Antriebsscheibe 44 mit Bezug auf das Fahrzeug bei einer Höhenänderung des Mähwerkes nicht ändert.

Durch die an das Ende der Kurbelwelle 18 anschließbare Verlängerung 40 ist es jetzt möglich, die Riemenauslenkungen bei einer Höhenänderung des Mähwerkes unterhalb eines Winkels von 6° mit Bezug auf die Horizontallage nach oben oder unten zu halten. In Fig. 2 sind die Längsmittellinien des Riemens 62 für die höchste Lage mit 64 und für die tiefste Lage mit 66 bezeichnet, und der Winkel α für die unterste Arbeitsstellung beträgt mit Bezug auf die Horizontale 5,5°, während der Winkel β für die höchste Lage mit Bezug auf die Horizontale etwa 3,7° beträgt.

Durch die Verlängerung 40 kann nunmehr die Antriebsscheibe 44 wesentlich tiefer gesetzt werden als bisher, so daß sie eine Lage einnimmt, daß sich bei einem Höhenverstellen des Gerätes die Riemenauslenkungen des Riemens 62 kaum bemerkbar machen bzw. nicht wesentlich von der idealen Horizontalen abweichen. Die Lebensdauer des Riemens 62 wird damit erheblich verlängert. Ein Abspringen des einzigen Riemens ist bei diesen geringen Winkeländerungen nicht zu befürchten. Wird das Fahrzeug für andere Arbeiten als Rasenmähen eingesetzt, so kann die Verlängerung leicht abgenommen werden, so daß die Bodenfreiheit nicht beeinträchtigt wird. In jedem Fall macht es die Verlängerung möglich, daß ein Rasenmäher an ein entsprechendes Standartfahrzeug anschließbar ist, ohne daß Änderungen an dem Fahrzeugchassis oder an dem Verbrennungsmotor vorgenommen werden müßten.

## Patentansprüche

1. Geräteantriebsvorrichtung für eine Fahrzeug (10) - Geräte - Kombination, wobei das Fahrzeug (10) mindestens ein antreibbares Laufrad (24) und einen Motor (38) mit einer bodenwärts austretenden Kurbelwelle (18) aufweist, das Gerät an dem Fahrzeug (10) höhenbeweglich angeschlossen ist und wenigstens eine Riemenscheibe (58) aufweist, die von der Kurbelwelle (18) aus über einen einzigen Riemen (62) antreibbar ist, dadurch gekennzeichnet, daß an das bodenwärts austretende Ende der Kurbelwelle (18) eine Verlängerung (40) mit einer Antriebsscheibe (44) anschließbar ist, die den einzigen Riemen (62) antreibt.

2. Antriebsvorrichtung nach Anspruch 1, dadurch gekennzeichnet, daß die Verlängerung (40) als auf die Kurbelwelle (18) aufsteckbare Manschette (46) ausgebildet ist.

3. Antriebsvorrichtung nach Anspruch 2, dadurch gekennzeichnet, daß die Manschette (46) über eine Keil-Nuten-Verbindung mit der Kurbelwelle (18) drehfest verbunden ist.

4. Antriebsvorrichtung nach einem oder mehreren der vorherigen Ansprüche, dadurch gekennzeichnet, daß oberhalb der Manschette (46) das bodenwärts austretende Ende der Kurbelwelle (18) mit einer Riemenscheibe (28) zum Antrieb des antreibbaren Laufrades (24) versehen ist und die Manschette (46) oberhalb der Antriebsscheibe (44) mit einer elektrischen Kupplung (42) versehen ist.

5. Antriebsvorrichtung nach Anspruch 4, dadurch gekennzeichnet, daß die Manschette (46) mit einer die elektrische Kupplung (42) und die Antriebsscheibe (44) aufnehmenden Manschettenverlängerung (50) versehen ist.

6. Antriebsvorrichtung nach einem oder mehreren der vorherigen Ansprüche, dadurch gekennzeichnet, daß die Manschette (46) mit der Kurbelwelle (18) verschraubbar ist.

7. Antriebsvorrichtung nach Anspruch 5 und 6, dadurch gekennzeichnet, daß die Manschettenverlängerung (50) einen kleineren Außendurchmesser als die Manschette (46) aufweist und mit einer Längsbohrung zur Aufnahme einer Schraubverbindung versehen ist, über die die elektrische Kupplung (42) und die Antriebsscheibe (44) mit der Kurbelwelle (18) verbindbar sind.

8. Antriebsvorrichtung nach einem oder mehreren der vorherigen Ansprüche, dadurch gekennzeichnet, daß bei mit der Kurbelwelle (18) befestigter Manschette (46) die Antriebsscheibe (44) eine derartige Lage einnimmt, daß bei einem Höhenverstellen des Gerätes bzw. der geräteseitigen Riemenscheibe (58) die Winkeländerung des Riemens (62) weniger als 12° beträgt.
